# EUROPÄISCHE PATENTANMELDUNG

(11) **EP 2 009 358 A2**
(43) Veröffentlichungstag der Anmeldung: **31.12.2008**
(21) Anmeldenummer: 08010938.2
(22) Anmeldetag: 17.06.2008
(51) Int. Cl.: F24D 19/10

(54) **Gebäudemodellbasiertes prädiktives Regelverfahren zum Heizen eines begrenzten Systems**

(30) Priorität: 30.06.2007 DE 102007030492
(71) Anmelder: ROBERT BOSCH GMBH, 70442 Stuttgart (DE)
(72) Erfinder: Weiss, Martin, 70771 Leinfelden (DE); Stumpp, Hermann, 73728 Esslingen (DE); Oertel, Kai, 70569 Stuttgart (DE)

(57) **Zusammenfassung**

Die Erfindung betrifft ein Verfahren, Computerprogramm, Regler (1) und Heizungssystem zum Regeln einer Heizeinrichtung (3) zum Wärmen eines begrenzten Systems (2) wie einem Gebäude, insbesondere zum Regeln einer Heizung (3) eines Gebäudes (2) zum Einstellen einer Raumtemperatur, nach dem Oberbegriff der Patentansprüche 1,7,8 bzw. 10.

Es ist eine Aufgabe der Erfindung, ein Verfahren, ein Computerprogramm einen Regler (1) und ein Heizungssystem zum Regeln einer Heizeinrichtung (3) zum Wärmen eines begrenzten Systems (2) wie einem Gebäude, insbesondere zum Regeln einer Heizung (3) eines Gebäudes zum Einstellen einer Raumtemperatur zu schaffen, welches insbesondere auch prädiktive, das heißt erwartetet oder zukünftige Parameter abschätzt und/oder verwendet, wobei eine Benutzerfreundlichkeit bei der Bedienung gewährleistet ist.

Gekennzeichnet ist die Erfindung dadurch, dass die folgenden Schritte oder Mittel zum Durchführen der folgenden Schritte umfasst sind: Bilden eines Models (1'), insbesondere eines Gebäudemodells, des zu regelnden Systems (2), Erfassen mindestens eines Sollwertparameters zum Regeln der Heizeinrichtung (3), Erfassen mindestens eines Ist-Parameters des Systems (2) zum Regeln der Heizeinrichtung (3) in Abhängigkeit von diesem Ist-Parameter, bedarfsgeführtes Regeln der Heizeinrichtung (3) anhand des Modells (1') unter Berücksichtigung der erfassten Parameter, und Durchführen eines Schätzverfahrens, insbesondere eines prädiktiven Schätzverfahrens (7,10,13), welches bei Änderung des mindestens einen Sollwertparameters anhand des Modells (1') und der erfassten Parameter eine Simulation der Regelung der Heizeinrichtung (3) durchführt und die Auswirkungen der Änderung ausgibt und/oder an eine Regeleinrichtung (1) zum Regeln übergibt (8,11,14).

## Beschreibung

Die Erfindung betrifft ein Verfahren, ein Computerprogramm und ein Computerprogrammprodukt zum Regeln einer Heizeinrichtung zum Wärmen eines begrenzten Systems wie einem Gebäude, insbesondere zum Regeln einer Heizung eines Gebäudes zum Einstellen einer Raumtemperatur, nach dem Oberbegriff des Patentanspruches 1 und 7.

Weiter betrifft die Erfindung einen Regler für eine Heizeinrichtung zum Wärmen eines Systems wie einem Gebäude, insbesondere zur Regelung einer Heizung eines Gebäudes zum Regeln einer Raumtemperatur, nach dem Oberbegriff des Patentanspruchs 8.

Darüber hinaus betrifft die Erfindung ein Heizungssystem zur Erzeugung von Wärme zum Wärmen eines Systems wie einem Gebäude, insbesondere zum geregelten Heizen eines Raums, nach dem Oberbegriff des Anspruchs 10.

Die herkömmlichen Verfahren zur Regelung einer Raumtemperatur eines begrenzten Systems wie einem Gebäude erfolgen über eine Steuerung einer Vorlauftemperatur eines Heizsystems in Abhängigkeit von einer Außentemperatur gemäß einer Heizkennlinie oder der Temperatur eines Führungsraums. Dieses entspricht einem Vorsteuerungsverfahren, in welchem einem Raum in einem ungestörten Zustand soviel Wärme zugeführt wird, wie durch Wärmeübertragung, Wärmeleitung und dergleichen durch Wände, Luftwechsel mit einer Umgebungsluft des Gebäudes und dergleichen, abgeführt wird, also gemäß einem Gleichgewicht zwischen zugeführter Energie und abgeführter Energie. Ergänzt wird dieses Verfahren durch eine Regelung wie eine Feedback-Regelung, beispielsweise mittels Thermostat-Regelventilen, welche auftretende Störungen wie Stoßlüftungen, Wärmeeinbringungen durch zum Beispiel solare Energiegewinnung oder interne Quellen, ausgleicht.

Schwierig ist die Vorgabe der Heizkennlinie, welche die erforderliche Vorlauftemperatur in Abhängigkeit der Außentemperatur vorgibt. Die Heizkennlinie ergibt sich unter anderem aus bauphysikalischen Parametern des Gebäudes, welche jedoch oft gar nicht oder nur ungenügend bekannt sind, oder aus sonstigen Gründen wie Zeitmangel und dergleichen nicht eingestellt oder aktualisiert werden.

Neuere Ansätze für ein entsprechendes Regelverfahren basieren daher auf einer bedarfsgeführten Vorlauftemperaturregelung, zum Beispiel durch Wärmeflussmessung an Heizkörpern oder modellbasierte Verfahren zur Bestimmung des Wärmebedarfs anhand zeitlich zurückliegender Daten. Von einem Benutzer müssen hierbei Sollwerte für die Raum-Temperaturen vorgegeben werden.

Dies führt jedoch einerseits zu variierenden Heizkosten aufgrund schwankender Verbräuche, unterschiedlicher Energiekosten und dergleichen, und weist andererseits nur ein begrenztes Energiespar-Potential auf, da nur der aktuelle Betrieb optimiert wird und Überkapazitäten reduziert werden. Jedoch besteht ein sehr großes Energiespar-Potential darin, die Raumtemperaturen zu reduzieren und insbesondere zukünftige Parameter abzuschätzen und Räume danach entsprechend optimiert zu heizen.

Aus der DE 199 16 186 C2 ist ein mit Öl oder Gas befeuerter Wärmeerzeuger bekannt, insbesondere ein bodenstehender oder wandhängender Heizkessel mit einem die Brennerlaufzeiten und den Brennstoffverbrauch erfassenden und in einer Anzeigevorrichtung anzeigenden Regler, wobei im Regler Stammdaten bezüglich des für unterschiedliche Düsengrößen am Brenner sich ergebenden Brennstoffdurchsatzes hinterlegt sind, der Regler Vorrichtungen zum Einstellen variabler Parameter, wie Brennstoffart und eingesetzte Düsengröße besitzt und wobei in der Anzeigevorrichtung der anhand der Stammdaten, der variablen Parameter und der Brennerlaufzeiten ermittelte Brennstoffverbrauch in Einzel-, Summen- oder Durchschnittsauswertung je Zeiteinheit anzeigbar ist.

Nachteilig an dieser Lösung ist, dass lediglich Daten aus der Vergangenheit für die Regelung verwendet werden, wobei Eingaben wie Düsengröße und dergleichen wenig benutzerfreundlich sind und der Heizkessel keine Vorausberechnungen zum Beispiel hinsichtlich eines Energiesparpotentials, einer einzustellenden Temperatur in Abhängigkeit von Zielvorgaben und dergleichen anstellt.

Der Erfindung liegt die Aufgabe zugrunde, ein Verfahren, ein Computerprogramm und ein Computerprogrammprodukt zum Regeln einer Heizeinrichtung zum Wärmen eines begrenzten Systems wie einem Gebäude, insbesondere zum Regeln einer Heizung eines Gebäudes zum Einstellen einer Raumtemperatur zu schaffen, welches insbesondere auch prädiktive Berechnungen durchführt, das heißt erwartete oder zukünftige Parameter abschätzt und/oder verwendet, wobei eine Benutzerfreundlichkeit bei der Bedienung gewährleistet ist.

Eine weitere Aufgabe der Erfindung ist es, einen Regler für eine Heizeinrichtung zum Wärmen eines Systems wie einem Gebäude, insbesondere zur Regelung einer Heizung eines Gebäudes zum Regeln einer Raumtemperatur, sowie ein Heizungssystem zur Erzeugung von Wärme zum Wärmen eines Systems wie einem Gebäude, insbesondere zum geregelten Heizen eines Raums zu schaffen, welche vorausschauend und benutzerfreundlich sind.

Erfindungsgemäß wird dies mit den Merkmalen der Patentansprüche 1, 7, 8 und 10 gelöst. Vorteilhafte Weiterbildungen sind den Unteransprüchen zu entnehmen.

Das Verfahren zum Regeln einer Heizeinrichtung zum Wärmen eines begrenzten Systems wie einem Gebäude, insbesondere zum Regeln einer Heizung eines Gebäudes zum Einstellen einer Raumtemperatur ist dadurch gekennzeichnet, dass die folgenden Schritte umfasst sind: Bilden eines Models, insbesondere eines Gebäudemodells, des zu regelnden Systems, Erfassen mindestens eines Sollwertparameters zum Regeln der Heizeinrichtung, Erfassen mindestens eines Ist-Parameters des Systems zum Regeln der Heizeinrichtung in Abhängigkeit von diesem Ist-Parameter, bedarfsgeführtes Regeln der Heizeinrichtung anhand des Modells unter Berücksichtigung der erfassten Parameter, und Durchführen eines Schätzverfahrens, insbesondere eines prädiktiven Schätzverfahrens, welches bei Änderung des mindestens einen Sollwertparameters anhand des Modells und der erfassten Parameter eine Simulation der Regelung der Heizeinrichtung durchführt und die Auswirkungen der Änderung ausgibt und/oder an eine Regeleinrichtung zum Regeln übergibt.

In einer Ausführungsform ist vorgesehen, dass das Erfassen des Sollwertparameters die Eingabe des Sollwertparameters durch einen Benutzer umfasst, wobei der Sollwertparameter ausgewählt ist aus der Gruppe umfassend: Raumtemperatur, insbesondere die Raumtemperatur verschiedener Zonen, Energiekosten, Heizkosten, Heizkostenveränderung, Zeitschaltpunkte, Absenkzeiten, Brennstoffmenge, Brennstoffart und dergleichen.

In einer weiteren Ausführungsform umfasst das Erfassen des mindestens einen Ist-Parameters das Erfassen mindestens eines Ist-Parameters, ausgewählt aus der Gruppe umfassend: Heizkosten, Energiekosten, Brennstoffpreise, Rohölpreise, Gaspreise, Verbrauch an Brennstoff, Außentemperatur, Umgebungstemperatur, Anzahl präsenter Lebewesen, Brennstofffüllstand und dergleichen.

Noch ein weiteres Ausführungsbeispiel sieht vor, dass das Ausgeben der Auswirkungen der Änderungen und/oder das Ausgeben und/oder Übergeben von Daten, ausgewählt aus der Gruppe umfassend: Veränderungen der Energiekosten, zu erwartende Energiekosten, zu erwartender Verbrauch, Solltemperaturvorschläge, optimierter Temperatursollwert, Durchschnittswert der vorherigen Daten, Veränderungen der vorherigen Daten, Warnungen bei Überschreiten eines vorgebbaren Grenzwertes, Einsparpotential und dergleichen, umfasst.

In einem anderen Ausführungsbeispiel ist vorgesehen, dass das Regeln der Heizeinrichtung in zumindest einem Betriebsmodus aus verschiedenen Betriebsmodi durchgeführt wird, ausgewählt aus der Gruppe der Betriebsmodi: Monitoring des Regelns, Unterbreiten von Vorschlägen für Sollwerte in Abhängigkeit von zumindest einem erfassten Parameter, automatische Generierung von Sollwertparameter-Profilen in Abhängigkeit von einem vorgegebenen Sollwertparameter.

Noch ein weiteres Ausführungsbeispiel sieht vor, dass das Modell des Systems durch wiederholtes Erfassen des mindestens einen Ist-Parameters und/oder des Sollwertparameters wiederholt adaptiert wird.

Das Computerprogramm ist dadurch gekennzeichnet, dass dieses Programmcodemittel zum Durchführen alle erfindungsgemäßen Schritte umfasst, wenn das Programm auf einem Computer, einer Regel- und/oder Steuereinrichtung und/oder dergleichen ausgeführt wird. Entsprechend ist ein Computerprogrammprodukt vorgesehen, auf welchem das Computerprogramm gespeichert oder abgelegt ist.

Der Regler für eine Heizeinrichtung zum Wärmen eines Systems wie einem Gebäude, insbesondere zur Regelung einer Heizung eines Gebäudes zum Regeln einer Raumtemperatur, ist dadurch gekennzeichnet, dass dieser Mittel zur Durchführung des erfindungsgemäßen Verfahrens umfasst.

In einer Ausführungsform ist vorgesehen, dass der Regler mindestens einen Abschnitt zum Erfassen mindestens eines Sollwertparameters zum Regeln der Heizeinrichtung, mindestens einen Abschnitt zum Erfassen mindestens eines Ist-Parameters des Systems zum Regeln der Heizeinrichtung, mindestens einen Abschnitt zum bedarfsgeführten Regeln der Heizeinrichtung anhand eines Modells des Systems unter Berücksichtigung der erfassten Ist-Parameter und mindestens einen Abschnitt zum Durchführen eines (prädiktiven) Schätzverfahrens, welches bei Änderung mindestens eines Sollwertparameters anhand des Modells und der erfassten Parameter eine Simulation der Regelung der Heizeinrichtung durchführt und die Auswirkungen der Änderung ausgibt, umfasst. _

Das Heizungssystem zur Erzeugung von Wärme zum Wärmen eines Systems wie einem Gebäude, insbesondere zum geregelten Heizen eines Raums, ist dadurch gekennzeichnet, dass das Heizungssystem umfasst: mindestens eine Heizeinrichtung zur Abgabe von Wärme an einen umgebenden Raum oder das umgebende System, mindestens einen erfindungsgemäßen Regler, mindestens eine Bedieneinheit zum Eingeben und/oder Erfassen eines Sollwertparameters, mindestens einen Sensor zum Erfassen mindestens eines Ist-Parameters und mindestens eine Ausgabe-/Übergabeeinheit zum Ausgeben und/oder Übergeben von Daten.

Mit dem erfindungsgemäßen Verfahren, Computerprogramm, Regler und Heizungssystem werden insbesondere die folgenden Vorteile realisiert:

Durch die Erfindung lassen sich Fehlverhalten und eine Quantifizierung der Auswirkungen von Sollwertänderungen aufzeigen. Über ein Display werden dem Benutzer aktuelle Verbrauchsinformationen zur Verfügung gestellt und auf nicht verbrauchsoptimale Einstellungen, insbesondere Einstellungen durch den Benutzer hingewiesen, insbesondere unter Berücksichtigung von Sollwerten unter Abschätzung von Parametern. Es besteht die Möglichkeit, Auswirkungen durch veränderte Sollwerte wie Solltemperaturen in Form von Steigerung, Reduktion beispielsweise der Energiekosten zu präsentieren, sowie Vorschläge für Solltemperaturen zu unterbreiten, um eine gewünschte Einsparung zu erzielen. Der Benutzer kann die Auswirkungen seiner Vorgabe aufgrund eines verwendeten prädiktiven Modells bewerten und abschätzen. Zudem lässt sich über dieses prädiktive Modell ein vorgegebenes Budget, beispielsweise eine vorgegebene obere Grenze für Heizkosten, einhalten. Bei einer entsprechenden Vorgabe, wie einem Jahresbudget, wird der Betrieb der Heizeinrichtung, insbesondere der Heizung, bzw. die Temperatur für einen Raumkomfort entsprechend einer Kostengrenze angepasst.

Über das ständig mitlaufende, ständig aktualisierte Modellbildungsverfahren wird ein internes Gebäudemodell erstellt und kontinuierlich an Vorgaben, Schätzwerte und dergleichen angepasst bzw. adaptiert. Dazu werden Verbrauch, Sollwerte, Außentemperatur, Nutzeranwesenheit und dergleichen erfasst, aktualisiert und gespeichert und abgerufen. Mit dem prädiktiven Schätzverfahren, welches insbesondere mittels aufgezeichneter Daten und dem Gebäudemodell über eine Simulation oder mehrere Simulationen den Energieverbrauch, den Wärmeverbrauch und dergleichen bei veränderten Vorgaben, wie veränderten Sollwerten, ermittelt, lassen sich insbesondere Verbrauchs- und Heizkosten abschätzen. Hierdurch können der Verbrauch, die Kosten und dergleichen für veränderte Sollwerte prädiktiv und zuverlässig ermittelt werden und dem Benutzer die Folgen seiner Einstellungen oder Vorgaben direkt angezeigt werden. Dies unterstützt den Benutzer ebenfalls beim Auswählen von Vorgabeprogrammen, wie Sparprogrammen oder Sparmaßnahmen, indem dem Benutzer zum Beispiel angezeigt wird, in welchem Raum des Gebäudes die größten Einsparungen erzielt werden können. In einem Betrieb, insbesondere dem Budgetbetrieb, wird eine Kostenkontrolle und eine Kostenübersicht durch eine Visualisierung der Verbrauchsdaten und damit nicht zuletzt eine Kostensicherheit erreicht.

Die Zeichnungen stellen verschiedene Aspekte der Erfindung dar und zeigen in mehreren Figuren:
- Fig. 1: schematisch ein Blockschaltbild der erfindungsgemäßen Regelung und
- Fig. 2A-C: schematisch drei verschiedene Betriebsmodi der erfindungsgemäßen Regelung.

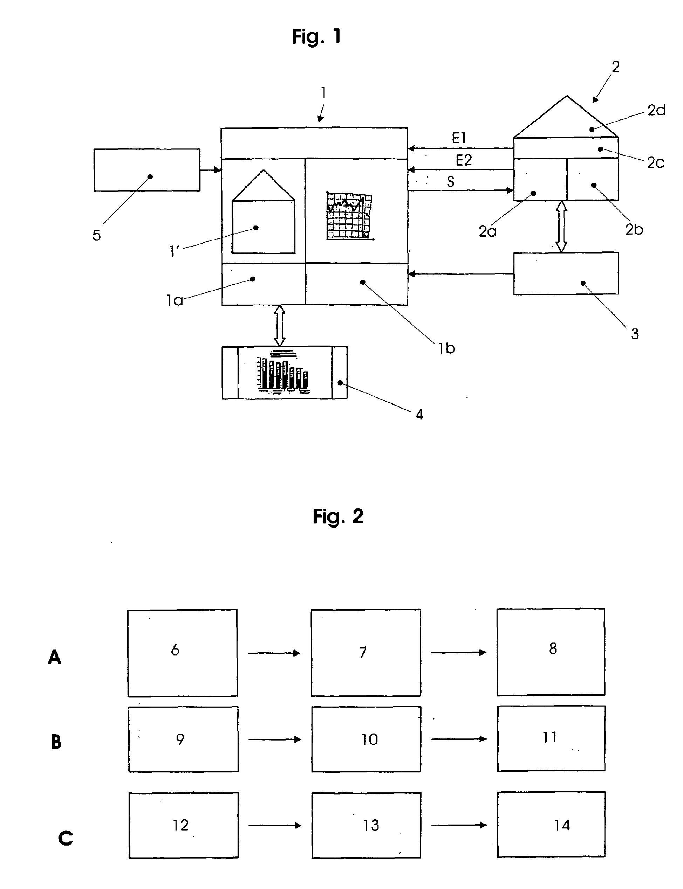

Fig. 1 zeigt schematisch ein Blockschaltbild der erfindungsgemäßen Regelung. In der Fig. 1 kennzeichnet das Bezugszeichen 1 einen Regler und das Bezugszeichen 2 ein Gebäude. Der Regler 1 weist in der dargestellten Figur im Wesentlichen zwei Abschnitte (getrennt durch eine vertikale Linie) auf, wobei der erste Abschnitt 1a (links) zur Bildung und zum Ablegen des Modells 1', insbesondere des Gebäudemodells 1' ausgebildet ist, und der zweite Abschnitt 1 b (rechts) zum Erfassen von Daten ausgebildet ist.

Das Gebäude 2 weist mehrere (in der Fig. 1 vier) Zonen 2a, 2b, 2c, 2d auf. Die vier Zonen 2a-2d, welche den Räumen des Gebäudes 2 entsprechen, bilden begrenzte (Sub-)Systeme des Gebäudes 2, wobei das Gebäude 2 selbst ein begrenztes System ist (bildet). Über eine als Heizung ausgebildete Heizeinrichtung 3, welche sowohl mit dem Regler 1 als auch mit dem Gebäude 2 in Wirkverbindung steht, wird dem Gebäude 2 bzw. den Räumen 2a-2d entsprechend Wärme zugeführt.

An den Regler 1 ist interaktiv eine Bedieneinheit mit Anzeigevorrichtung 4 gekoppelt, dargestellt durch den Doppelpfeil zwischen Regler 1 und Bedieneinheit/Anzeigevorrichtung 4, welche ein Display sowie Eingabemittel aufweist und eine Schnittstelle für die Mensch-Maschine-Kommunikation bildet.

Mit Bezugszeichen 5 ist eine (äußere) Umgebung gekennzeichnet, welche mit dem Regler 1 gekoppelt ist und welche Informationen an den Regler 1 übermitteln kann, dargestellt durch den Pfeil zwischen Umgebung 5 und Regler 1.

Regler 1 und Gebäude 2 stehen miteinander in Kommunikation, wie durch die drei Pfeile zwischen Regler 1 und Gebäude 2 dargestellt. Die Pfeilspitzen in Fig. 1 geben jeweils die Richtung der Kommunikation an.

Der Aufbau und die Funktion der Regelung sind wie folgt:
Ein Heizungssystem gemäß Fig. 1 setzt sich aus einem zentralen Regler 1, welcher an einer Heizung 3 angeschlossen ist und einer Bedieneinheit 4, welche in den Regler 1 integriert oder wie dargestellt separat ausgebildet sein kann, zusammen. Über die Bedieneinheit 4 können Sollwerte für eine Raumtemperatur für einzelne Zonen 2a-2d oder das gesamte Gebäude 2 vorgeben werden und dem Regler 1 durch eine geeignete Schnittstelle übergeben werden (gekennzeichnet durch S bei dem untersten der drei Pfeile zwischen Regler 1 und Gebäude 2). Über diese Schnittstelle werden die Sollwerte für die Zonen 2a-2d direkt oder über eine Gebäudeleittechnik an Einzel-Raumregler oder ein Energiemanagement-System übergeben. Zudem weist der Regler 1 eine Schnittstelle auf, über welche Daten, die mittels zum Beispiel eines Außentemperatursensors, eines Raumtemperatursensors und/oder ggf. von Präsenzsensoren erfasst sind, ausgetauscht werden können (gekennzeichnet durch E1, E2 bei den obersten beiden der drei Pfeile zwischen Regler 1 und Gebäude 2).

Die Bedieneinheit 4 ist in einer der Zonen 2a-2d angeordnet, bevorzugt in einem Wohnbereich, und visualisiert dem Benutzer aktuelle Soll- und Verbrauchswerte sowie Warnungen, Hinweise und Vorschläge für Einstellungen, insbesondere bei nicht verbrauchsoptimalen Einstellungen. Zudem erfolgt über die Bedieneinheit 4 die Eingabe von Profilen für Raumtemperatur-Sollwerte zentral und nicht dezentral an den Einzelraum-Reglern, wie im Stand der Technik.

Die Regelung funktioniert wie folgt: Zunächst wird das Modell 1' des Gebäudes erstellt. Mit den Messwerten, zum Beispiel der Außentemperatur, dem Verbrauch, der Raumtemperatur etc., wird eine kontinuierliche, adaptive Modellbildung bzw. Modellkorrektur durchgeführt. Dies erfolgt durch in rekursiven, quasi-rekursiven oder diskreten Intervallen ausgeführte Identifikations-Verfahren. Es kann ein vereinfachtes Gebäudemodell 1' verwendet werden.

Anhand des Gebäudemodells 1' erfolgt in Kombination mit Verbrauchs-, Klima- und sonstigen Parametern der Vergangenheit (z. B. von Heizgradtagen) eine Verbrauchs-, Klima- und sonstige Parameter-Abschätzung für den laufenden und/oder zukünftigen Betrieb. In Kombination mit Füllstandsmessern, z. B. an einem Öltank oder einem Pellets-Behälter, kann die Verbrauchsabschätzung verwendet werden, um eine "Reichweitenangabe" zu machen, also die geschätzte Dauer bis zum Aufbrauchen der Reserven. Alternativ kann ein Heizprofil zum Erreichen eines Zielzeitpunkts mit dem vorhandenen Brennstoff vorgegeben werden.

Durch dynamische Simulation anhand des Gebäudemodells 1' mit veränderten Sollwerten wird eine Abschätzung z. B. der Einsparung beabsichtigter Einstellungen oder Maßnahmen durchgeführt. In einem Budget-Modus (zu den verschiedenen Betriebs-Modi siehe Fig. 2) wird diese Abschätzung verwendet, um durch eine kontinuierliche Anpassung der Sollwerte für die Raumtemperatur und die Absenkzeiten ein zuvor definiertes maximales Heizkostenbudget einzuhalten. Für eine entsprechende Verbrauchsanpassung sind variierbare Parameter zum Beispiel: Sollwert der Raumtemperatur tagsüber (pro Zone), Sollwert der Raumtemperatur während des Absenkphase (pro Zone), Dauer der Absenkphase (pro Zone) und Temperatur des Warmwasser-Speichers. Die Regelung kann in verschiedenen Betriebsmodi erfolgen, welche in Bezug auf Fig. 2 näher erläutert sind.

Fig. 2A-C zeigen schematisch drei verschiedene Betriebsmodi der erfindungsgemäßen Regelung. Für den Betrieb des Heizungssystems sind unter anderem folgende Betriebsmodi denkbar:
1) Monitoring des Betriebs und Ausgabe von Warnungen bei unsachgemäßem Betrieb oder Störungen (Fig. 2A). Hierbei werden bei einer Veränderung der Sollwerte (Bezugszeichen 6) für Raumtemperatur, Absenkzeiten etc. an der Interaktionsschnittstelle anhand des Modells 1' eine Verbrauchsermittlung 7 simuliert und so die Auswirkungen dieser Änderungen auf den Energieverbrauch angezeigt (Bezugszeichen 8). Zum Beispiel gibt der Nutzer einen Befehl ein, der etwa lautet "Reduktion von T_sott 22°C auf 21°C". Daraufhin wird die Sollwertveränderung 6 in dem Modell 1' simuliert und eine Verbrauchsermittlung 7 durchgeführt, woraufhin die Ergebnisse in einem nachfolgenden Schritt 8 ausgegeben werden. Die Ausgabe kann zum Beispiel die Anzeige von Einsparungen, Mehrverbrauch und Reichweite umfassen.
2) Unterbreiten von Vorschlägen für Sollwerte bei Angabe einer gewünschten Verbrauchssenkung (Fig 2B). Hierbei gibt das Heizungssystem Vorschläge für Sollwertänderungen bei Eingabe eines gewünschten Wertes für ein Budget oder eine relative Einsparung an. In einem ersten Schritt 9 wird somit zum Beispiel eine relative Einsparung vorgegeben. Nach Simulation mittels des Modells 1' zur Durchführung einer Verbrauchsermittlung 10 werden die Ergebnisse in Schritt 11 Ausgegeben. Die Ergebnisse können neue Sollwerte oder auch eine Reichweite umfassen. Zum Beispiel gibt der Benutzer einen Befehl ein wie etwa "Gewünschte Einsparung von 10% der Energiekosten". Daraufhin wird die Verbrauchsermittlung 10 durchgeführt und als Ergebnisse neue Sollwerte und/oder eine Reichweite ausgegeben 11. Alternativ oder optional kann die Regelung eigenständig Verbesserungsvorschläge unterbreiten wie zum Beispiel "Reduziere die Temperatur in Zone 1 um 2°C und/oder die Absenkzeit um 1 Stunde und/oder das Absenkniveau um 2°C und du kannst 4-10% deiner Heizkosten einsparen, was bei den momentanen Heizkosten, die aus der Umgebung 5 bezogen wurden, etwa 95 Euro pro Jahr entspricht.
3) Automatische Generierung der Sollwert-Profile für die Raumtemperaturen bei Vorgabe einer oberen Grenze für die jährlichen Heizkosten (Budget). In einem ersten Schritt 12 erfolgen zunächst die Eingabe des Budget-Wertes und die Angabe von Wunsch- und/oder Minimaltemperaturen für jede Zone. In einem zweiten Schritt 13 wird eine Verbrauchsermittlung und/oder eine Sollwertermittlung simuliert. Dabei wird mittels kontinuierlicher Anpassung der Sollwerte versucht, das Budget einzuhalten. Im Falle von Extrembedingungen und/oder drohender Überschreitung des Budgets, ggf. über einen vorgebbaren Toleranzbereich hinaus, wird eine entsprechende Warnung ausgegeben. Zur Kontrolle werden in einem Schritt 14 zum Beispiel die Kosten und/oder die Reichweite angegeben. Alternativ erfolgt kein automatischer Betrieb sondern es werden regelmäßig Vorschläge zum Einhalten des Budgets ausgegeben.

Mögliche Verfahren für die Kosterermittlung sind die Folgenden:
1) Der Verbrauch wird aus einem von dem Modell 1' vorhergesagten Wärmebedarf und einzugebender Anlagenwirkungsgrade (Katalogwerte) berechnet.
2) Die Verbrauchsermittlung erfolgt durch Wärmemengenzähler, insbesondere digitale Wärmemengenzähler, wie sie zum Beispiel in Mehrfamilien-Häuser für die Heizkostenerfassung eingesetzt werden.
3) Die Verbrauchsermittlung erfolgt über einen Verbrauchszähler (Strom, Gas), einen Füllstandsmesser (Öl, Pellets) oder direkt an dem Regler oder der Heizung, wobei diese eine entsprechende Schnittstelle aufweisen müssen.
4) Die Heiz- oder Energiekosten berechnen sich aus den Verbrauchswerten aus den Verfahren 1) - 3) und Energiepreisen, welche über eine manuelle Eingabe oder eine Online-Schnittstelle zum Energieversorger (äußere Umgebung 5) für Gas, Strom etc. bezogen werden können.

## Patentansprüche

1. Verfahren zum Regeln einer Heizeinrichtung (3) zum Wärmen eines begrenzten Systems (2) wie einem Gebäude, insbesondere zum Regeln einer Heizung (3) eines Gebäudes (2) zum Einstellen einer Raumtemperatur, umfassend die Schritte:
Bilden eines Models (1'), insbesondere eines Gebäudemodells, des zu regelnden Systems (2),
Erfassen mindestens eines Sollwertparameters zum Regeln der Heizeinrichtung (3),
Erfassen mindestens eines Ist-Parameters des Systems (2) zum Regeln der Heizeinrichtung (3) in Abhängigkeit von diesem Ist-Parameter,
bedarfsgeführtes Regeln der Heizeinrichtung (3) anhand des Modells (1') unter Berücksichtigung der erfassten Parameter, und
Durchführen eines Schätzverfahrens, insbesondere eines prädiktiven Schätzverfahrens (7, 10, 13), welches bei Änderung des mindestens einen Sollwertparameters anhand des Modells (1') und der erfassten Parameter eine Simulation der Regelung der Heizeinrichtung (3) durchführt und die Auswirkungen der Änderung ausgibt und/oder an eine Regeleinrichtung (1) zum Regeln übergibt (8, 11, 14).

2. Verfahren nach Anspruch 1,
**dadurch gekennzeichnet, dass**
das Erfassen des Sollwertparameters die Eingabe des Sollwertparameters durch einen Benutzer umfasst (6, 9, 12), wobei der Sollwertparameter ausgewählt ist aus der Gruppe umfassend: Raumtemperatur, insbesondere die Raumtemperatur verschiedener Zonen, Energiekosten, Heizkosten, Heizkostenveränderung, Zeitschaltpunkte, Absenkzeiten, Brennstoffmenge, Brennstoffart und dergleichen.

3. Verfahren nach den Ansprüchen 1 oder 2,
**dadurch gekennzeichnet, dass**
das Erfassen des mindestens einen Ist-Parameters das Erfassen mindestens eines Ist-Parameters, ausgewählt aus der Gruppe umfassend: Heizkosten, Energiekosten, Brennstoffpreise, Rohölpreise, Gaspreise, Verbrauch an Brennstoff, Außentemperatur, Umgebungstemperatur, Anzahl präsenter Lebewesen, Brennstofffüllstand und dergleichen, umfasst.

4. Verfahren nach einem der Ansprüche 1 bis 3,
**dadurch gekennzeichnet, dass**
das Ausgeben der Auswirkungen der Änderungen und/oder das Ausgeben und/oder Übergeben von Daten (8, 11, 14), ausgewählt aus der Gruppe umfassend: Veränderungen der Energiekosten, zu erwartende Energiekosten, zu erwartender Verbrauch, Solltemperaturvorschläge, optimierter Temperatursollwert, Durchschnittswert der vorherigen Daten, Veränderungen der vorherigen Daten, Warnungen bei Überschreiten eines vorgebbaren Grenzwertes, Einsparpotential und dergleichen, umfasst.

5. Verfahren nach einem der Ansprüche 1 bis 4,
**dadurch gekennzeichnet, dass**
das Regeln der Heizeinrichtung in zumindest einem Betriebsmodus aus verschiedenen Betriebsmodi durchgeführt wird, ausgewählt aus der Gruppe der Betriebsmodi: Monitoring des Regelns (6-7-8), Unterbreiten von Vorschlägen für Sollwerte in Abhängigkeit von zumindest einem erfassten Parameter (9-.10-11), automatische Generierung von Sollwertparameter-Profilen in Abhängigkeit von einem vorgegebenen Sollwertparameter (12-13-14).

6. Verfahren nach einem der Ansprüche 1 bis 5,
**dadurch gekennzeichnet, dass**
das Modell (1') des Systems (2) durch wiederholtes Erfassen des mindestens einen Ist-Parameters und/oder des Sollwertparameters wiederholt adaptiert wird.

7. Computerprogramm umfassend Programmcodemittel zum Durchführen aller Schritte gemäß jedes einzelnen der Ansprüche 1 bis 6, wenn das Programm auf einem Computer, einer Regel- und/oder Steuereinrichtung und/oder dergleichen ausgeführt wird.

8. Regler (1) für eine Heizeinrichtung (3) zum Wärmen eines Systems (2) wie einem Gebäude, insbesondere zur Regelung einer Heizung (3) eines Gebäudes (2) zum Regeln einer Raumtemperatur, umfassend Mittel zur Durchführung des Verfahrens nach einem der vorherigen Ansprüche 1 bis 6.

9. Regler (1) nach Anspruch 8,
**dadurch gekennzeichnet, dass** der Regler (1)
mindestens einen Abschnitt (1b) zum Erfassen mindestens eines Sollwertparameters zum Regeln der Heizeinrichtung (3),
mindestens einen Abschnitt (1 b) zum Erfassen mindestens eines Ist-Parameters des Systems (2) zum Regeln der Heizeinrichtung (3),
mindestens einen Abschnitt (1 b) zum bedarfsgeführten Regeln der Heizeinrichtung (3) anhand eines Modells (1') des Systems (2) unter Berücksichtigung der erfassten Ist-Parameter und
mindestens einen Abschnitt (1a) zum Durchführen eines Schätzverfahrens, insbesondere eines prädiktiven Schätzverfahrens, welches bei Änderung mindestens eines Sollwertparameters anhand des Modells (1') und der erfassten Parameter eine Simulation der Regelung der Heizeinrichtung (3) durchführt (7, 10, 13) und die Auswirkungen der Änderung ausgibt (8, 11, 14), umfasst.

10. Heizungssystem zur Erzeugung von Wärme zum Wärmen eines Systems (2) wie einem Gebäude, insbesondere zum geregelten Heizen eines Raums (2a-2d), umfassend:
mindestens eine Heizeinrichtung (3) zur Abgabe von Wärme an den umgebenden Raum (2a-2d) oder das umgebende System (2),
mindestens einen Regler (1) nach einem der Ansprüche 8 oder 9,
mindestens eine Bedieneinheit (4) zum Eingeben und/oder Erfassen eines Sollwertparameters,
mindestens einen Sensor zum Erfassen mindestens eines Ist-Parameters und
mindestens eine Ausgabe-/Übergabeeinheit zum Ausgeben und/oder Übergeben von Daten.
